# EUROPÄISCHE PATENTSCHRIFT

(11) **EP 0 806 329 B1**
(45) Veröffentlichungstag und Bekanntmachung des Hinweises auf die Patenterteilung: **18.09.2002**
(21) Anmeldenummer: 97105514.0
(22) Anmeldetag: 03.04.1997
(51) Int. Cl.: B60S 1/34, F16F 7/12

(54) **Vorrichtung zur axialen Fixierung einer axial im wesentlichen unbelasteten Welle**
Device to support an axially unloaded shaft
Dispositif de support d'un arbre non chargé axialement

(30) Priorität: 10.05.1996 DE 19618873
(43) Veröffentlichungstag der Anmeldung: 12.11.1997
(73) Patentinhaber: Volkswagen Aktiengesellschaft, 38436 Wolfsburg (DE)
(72) Erfinder: Gries, Wolfgang, 38527 Meine (DE)

(56) Entgegenhaltungen:
- EP-A- 0 015 172
- FR-A- 2 668 442
- GB-A- 2 274 628
- US-A- 5 056 801

## Beschreibung

Die Erfindung betrifft eine Vorrichtung zur axialen Fixierung einer axial im wesentlichen unbelasteten Welle in einer feststehenden Aufnahme mit einem Federring, der über seinen Umfang zumindest an einer Stelle eine Unterbrechung aufweist.

Eine solche Lagerung wird z. B. für eine Wischerwelle in einer Scheibenwischvorrichtung für Kraftfahrzeuge verwendet.

In der europäischen Offenlegungsschrift EP 603 085 A1 wird eine Lagerung einer solchen Welle mit zwei Gleitlagern vorgeschlagen. Weiterhin werden elastische Mittel vorgeschlagen über die axiale Stöße gedämpft werden sollen, und damit eine Beschädigung der Wischerwelle bzw. des Wischerarms verhindert wird. Der mögliche Federweg ist dabei durch die Dicke und Elastizität der elastischen Mittel begrenzt.

Eine weitere Lagerung ist in der deutschen Patentschrift DE 39 14 231 C2 beschrieben. Eine axiale Nachgiebigkeit wird dort jedoch nicht vorgeschlagen.

Bei keiner der oben genannten Lösungen ist eine axiale Nachgiebigkeit bei plötzlich auftretender axialer Beanspruchung vorgesehen. Insbesondere bei einer Verwendung einer derartigen Welle in einer Scheibenwischanlage eines Kraftfahrzeuges ist es wünschenswert, dass im Falle eines Verkehrsunfalles mit einem Fußgänger oder Radfahrer die Welle beim Aufprallen des Kopfes oder von Gliedmaßen zur Verringerung der Verletzungsgefahr nachgiebig gelagert ist bzw. durchrutschen kann.

Des weiteren ist aus der FR-A-2 668 442 eine Anordnung zur Lagerung einer axial im wesentlichen unbelasteten Welle in einer feststehenden Aufnahme vermittel zweier Gleitlager bekannt. Im Bereich zwischen diesen ist ein Ring mit einem Innendurchmesser größer als der Wellendurchmesser im Anordnungsbereich desselben angeordnet, wobei der Ring auf seiner der Welle zugewandten Seite mit einer sich in Richtung einer möglichen axialen Stoßbelastung verjüngenden koaxialen Fläche versehen ist. Mit dieser korrespondiert eine an der Welle in einem im Durchmesser vergrößerten Bereich ausgebildete, sich in der Stoßrichtung verjüngende Fläche. Bei einer Stoßbelastung wird die Welle axial in Richtung auf den Ring verbracht, und die beiden Flächen gelangen zur Anlage aneinander, wobei auf den Ring sowohl eine Kraftkomponente in axialer Richtung als auch eine solche in radialer Richtung ausgeübt wird. Dabei wird der an der Aufnahme anliegende Ring mit seinem äußeren Umfang gegen diese gedrückt, wodurch in Verbindung mit einer axialen Verschiebung der Welle und des Ringes Stoßenergie verzehrt wird.

Erfindung liegt nun die Aufgabe zugrunde, eine Vorrichtung zur Fixierung einer axial im wesentlichen unbelasteten Welle nach dem Oberbegriff des Anspruchs 1 so zu gestalten, dass die Welle bei einer plötzlich auftretenden axialen Beanspruchung durchrutscht.

Diese Aufgabe wird erfindungsgemäß durch die Merkmale des Anspruches 1 gelöst, vorteilhafte Aus- und Weiterbildungen sind in den Unteransprüchen gegeben.

Die Erfindung besteht darin, dass die Vorrichtung einen an einer feststehenden Aufnahme für die Welle angeordneten Federring aufweist, der an seinem Umfang an einer Stelle unterbrochen ist und eine koaxiale, sich in axialer Richtung auf die Aufnahme zu verjüngende oder erweiternde Fläche aufweist, mit der dieser an einer an der Welle oder der Aufnahme ausgebildeten und mit dieser korrespondierenden Fläche anliegt.

Bei einer plötzlich auftretenden Stoßbelastung in axialer Richtung weitet die Welle den Federring auf und rutscht durch den Federring und die Aufnahme oder sie drückt den Federring zusammen und rutscht mit diesem zusammen durch die Aufnahme. Ein besonders gutes Durchrutschvermögen wird erreicht, wenn sich die gegenüberliegenden verjüngenden oder erweiternden Flächenpaare in dem gleichen Winkel verjüngen oder erweitem. Eine genaue Zuordnung der Flächen ist in dem Ausführungsbeispiel beschrieben.

Ein besonders guter Kompromiss zwischen axialer Fixierung und Durchrutschvermögen wird erreicht, wenn der Winkel α ca. 30° beträgt.

Wird eine derartige Welle in einer Scheibenwischanlage eines Kraftfahrzeuges bei einem Unfall mit einem Fußgänger oder Radfahrer durch den Aufprall des Kopfes oder anderer Gliedmaßen stoßartig in axialer Richtung belastet, so rutscht die Welle durch. Das Verletzungsrisiko für den Fußgänger bzw. Radfahrer durch den Aufprall auf den Scheibenwischer ist damit verringert.

Nachfolgend wird die Erfindung anhand eines Ausführungsbeispiels näher beschrieben. Die zugehörigen Zeichnungen zeigen:
- Figur 1: Anordnung einer im Normalbetrieb axial unbelasteten Welle in einer Scheibenwischanlage eines Kraftfahrzeuges;
- Figur 2: Federring mit sich verjüngendem Innendurchmesser und sich verjüngender Welle;
- Figur 3: Federring mit sich verjüngendem Innendurchmesser;
- Figur 4: Federring mit sich verjüngendem Außendurchmesser und Aufnahme mit sich verjüngendem Innendurchmesser;
- Figur 5: Federring mit sich erweiterndem Durchmesser und Aufnahme mit sich erweiterndem Außendurchmesser;
- Figur 6: Federring mit sich erweiterndem Außendurchmesser und Wellenabsatz mit sich erweiterndem Innendurchmesser;
- Figur 7: Federring mit sich verjüngendem Innendurchmesser und anliegendem Wellenabsatz.

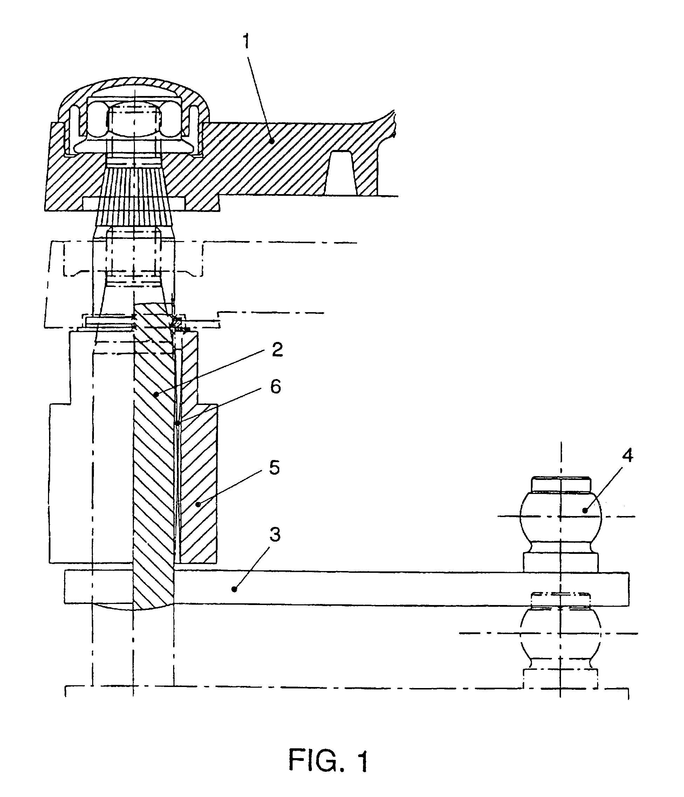

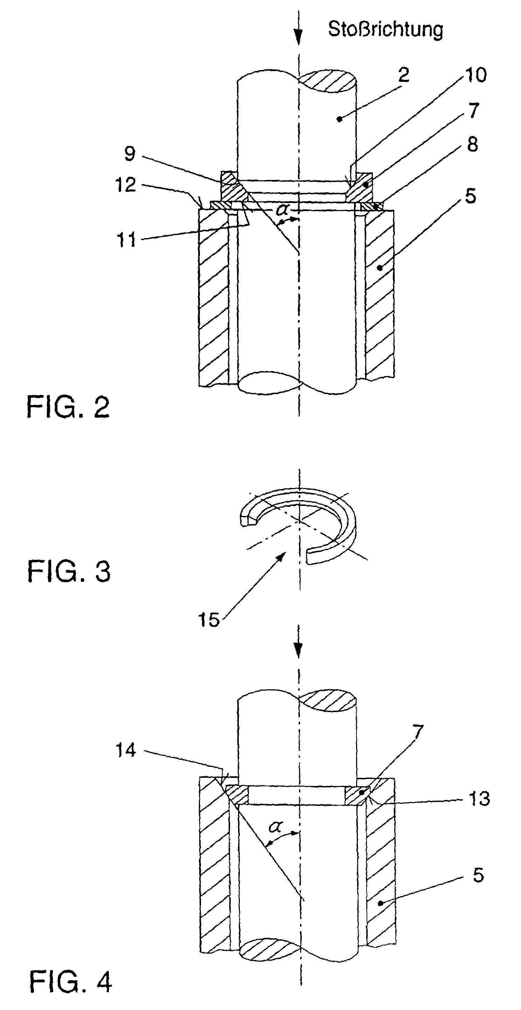

Figur 1 zeigt die Verwendung einer im Normalbetrieb axial unbelasteten Welle für eine Scheibenwischanlage einer Kraftfahrzeuges. Die Welle 2 ist in hier nicht näher dargestellten Gleitlagern 6 in der feststehenden Aufnahme 5 gelagert. Die feststehende Aufnahme 5 ist fest mit dem hier nicht dargestellten Fahrzeug verbunden. Die Welle 2 wird über einen Hebel 3 und einem Kugelkopf 4 angetrieben. Der Wischerarm 1 ist an dem dem Fahrzeug abgewandten Ende der Welle 2 angeordnet. Figur 2 zeigt den Federring 7 mit einer sich am inneren Durchmesser verjüngenden Fläche 10, die wiederum an der sich verjüngenden Fläche 9 der Welle 2 anliegt. Der Federring 7 weist zumindest eine Unterbrechung 15 über seinen Umfang auf und stützt sich über seine Fläche 11 direkt oder über die Unterlegscheibe 8 auf der Fläche 12 der Aufnahme 5 ab. Bei einer plötzlich auftretenden axialen Stoßbelastung, wie z. B. das Auftreffen eines Armes oder eines Kopfes von einem Fußgänger oder Radfahrer bei einem Verkehrsunfall, so wird der Federring 7 durch das Ineinandergreifen der sich verjüngenden Fläche 9; 10 aufgeweitet, und die Welle 2 rutscht durch den Federring 7 und die Aufnahme 5. Die Position nach dem Durchrutschen ist strichpunktiert in Figur 1 dargestellt.

In Figur 4 ist der Federring 7 mit einer sich am äußeren Durchmesser verjüngenden Fläche 13, die an einer sich verjüngenden Fläche 14 der Aufnahme 5 anliegt dargestellt. Wird die Welle 2 plötzlich axial belastet, so wird der Federring 7 durch die sich verjüngenden Flächen 13; 14 zusammengedrückt und rutscht mit der Welle durch die Aufnahme 5.

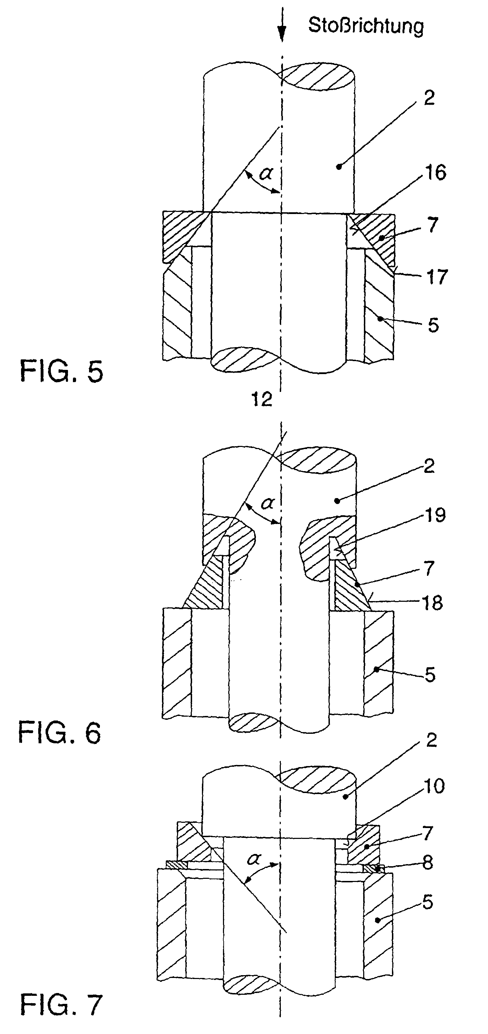

In Figur 5 ist der Federring 7 mit einer sich in Stoßrichtung erweiternden Fläche 16 des Innendurchmessers dargestellt. Die sich erweiternde Fläche 16 liegt an einer sich erweiternden Fläche 17 des Außendurchmessers der Aufnahme 5 an. Bei einer Stoßbelastung in Pfeilrichtung wird der Federring 7 aufgeweitet und die Welle 2 rutscht durch den Federring 7 und die Aufnahme 5 hindurch.

In Figur 6 wird der Federring 7 bei einer Belastung in Pfeilrichtung durch das Übereinandergreifen der sich erweiternden Flächen 18; 19 zusammengedrückt und rutscht dadurch mit der Welle durch die Aufnahme 5.

In Figur 7 ist eine Variante mit nur einer sich verjüngenden Fläche 10 dargestellt. Hier findet die Aufweitung des Federringes durch Druck der Kante des Absatzes der Welle 2 auf die sich verjüngende Fläche 10 statt.

Der Winkel α beträgt bei allen Varianten ca. 30°.

### BEZUGSZEICHENLISTE

- 1: Wischerarm
- 2: Welle
- 3: Hebel
- 4: Kugelkopf
- 5: Aufnahme
- 6: Lagerung mit Dichtringen
- 7: Federring
- 8: Unterlegscheibe
- 9: sich verjüngende Fläche
- 10: sich verjüngende Fläche
- 11: Fläche
- 12: Fläche
- 13: sich verjüngende Fläche
- 14: sich verjüngende Fläche
- 15: Unterbrechung des Umfanges
- 16: sich erweiternde Fläche
- 17: sich erweiternde Fläche
- 18: sich erweiternde Fläche
- 19: sich erweiternde Fläche
- α: Winkel

## Patentansprüche

1. Vorrichtung zur axialen Fixierung einer axial im wesentlichen unbelasteten Welle (2) in einer feststehenden Aufnahme (5) mit einem Federring (7), **dadurch gekennzeichnet, dass** der Federring (7) über seinen Umfang an einer Stelle eine Unterbrechung seines Umfangs (15) und eine koaxiale, sich in axialer Richtung unter einem Winkel α auf die Aufnahme (5) zu verjüngende (10; 13) oder erweiternde Fläche (16; 18) aufweist, mit der dieser (7) an einer an der Welle (2) oder der Aufnahme (5) ausgebildeten und mit der Fläche (10; 13; 16; 18) korrespondierenden Fläche (9; 14; 17; 19) anliegt.

2. Vorrichtung nach Anspruch 1, **dadurch gekennzeichnet, dass** der Winkel α im wesentlichen 30° beträgt.

3. Vorrichtung nach Anspruch 1, **dadurch gekennzeichnet, dass** der Federring (7) an der Aufnahme (5) abgestützt ist, und dass die sich verjüngende Fläche (10) auf der der Achse der Welle (2) zugekehrten Seite des Federringes (7) und die mit dieser (10) korrespondierende Fläche (9) am Umfang der Welle (2) ausgebildet ist.

4. Vorrichtung nach Anspruch 1, **dadurch gekennzeichnet, dass** der Federring (7) in einer an der Welle (2) ausgebildeten umlaufenden Nut angeordnet ist, und dass die sich verjüngende Fläche (13) auf der der Achse der Welle (2) abgewandten Seite des Federringes (7) und die mit dieser korrespondierende Fläche (14) an der Aufnahme (5) ausgebildet ist.

5. Vorrichtung nach Anspruch 1, **dadurch gekennzeichnet, dass** der Federring (7) an einem an der Welle (2) ausgebildeten Absatz an einer der Aufnahme (5) zugewandten, umlaufenden Anlageschulter abgestützt ist, und dass die sich erweiternde Fläche (16) auf der der Achse der Welle (2) zugewandten Seite des Federringes (7) und die mit dieser korrespondierende Fläche (17) an der Aufnahme ausgebildet ist.

6. Vorrichtung nach Anspruch 1, **dadurch gekennzeichnet, dass** der Federring (7) an der Aufnahme (5) abgestützt ist, und dass die sich erweiternde Fläche (18) auf der der Achse der Welle (2) abgewandten Seite des Federringes (7) und die mit dieser korrespondierende Fläche (19) an einer an der Welle (2) ausgebildeten Hinterschneidung ausgebildet ist.

7. Verwendung einer Vorrichtung nach einem der Ansprüche 1 bis 4 in einer Scheibenwischvorrichtung eines Kraftfahrzeuges.

## Claims

1. Device for axially fixing a shaft (2), which is essentially unstressed axially, in a fixed holder (5) with a spring ring (7), **characterized in that** the spring ring (7) has an interruption on its circumference (15) at a point on its circumference and has a coaxial surface (16; 18) which can taper (10; 13) or widen in the axial direction at an angle α to the holder (5) and with which the said ring (7) bears against a surface (9; 14; 17; 19) which is formed on the shaft (2) or on the holder (5) and corresponds with the surface (10; 13; 16; 18).

2. Device according to Claim 1, **characterized in that** the angle α is essentially 30°.

3. Device according to Claim 1, **characterized in that** the spring ring (7) is supported on the holder (5), and **in that** the tapering surface (10) is formed on that side of the spring ring (7) which faces the axis of the shaft (2) and the surface (9) corresponding with the said surface (10) is formed on the circumference of the shaft (2).

4. Device according to Claim 1, **characterized in that** the spring ring (7) is arranged in an encircling groove formed on the shaft (2), and **in that** the tapering surface (13) is formed on that side of the spring ring (7) which faces away from the axis of the shaft (2) and the surface (14) corresponding with the said surface is formed on the holder (5).

5. Device according to Claim 1, **characterized in that** the spring ring (7) is supported on a step formed on the shaft (2) on an encircling bearing shoulder which faces the holder (5), and **in that** the widening surface (16) is formed on that side of the spring ring (7) which faces the axis of the shaft (2) and the surface (17) corresponding with the said surface is formed on the holder.

6. Device according to Claim 1, **characterized in that** the spring ring (7) is supported on the holder (5), and **in that** the widening surface (18) is formed on that side of the spring ring (7) which faces away from the axis of the shaft (2) and the surface (19) corresponding with the said surface is formed on an undercut formed on the shaft (2).

7. Use of a device according to one of Claims 1 to 4 in a window-wiping device of a motor vehicle.

## Revendications

1. Dispositif pour la fixation axiale d'un arbre (2) sensiblement non chargé en direction axiale dans un support immobile (5) avec une bague élastique (7), **caractérisé en ce que** la bague élastique (7) présente en un endroit sur son périmètre une interruption de son périmètre (15) et une face coaxiale se rétrécissant (10; 13) ou s'évasant (16; 18) avec un angle α en direction axiale vers le support (5), par laquelle celle-ci (7) s'applique sur une face (9; 14; 17; 19) formée sur l'arbre (2) ou sur le support (5) et correspondant à la face (10; 13; 16; 18).

2. Dispositif suivant la revendication 1, **caractérisé en ce que** l'angle α vaut environ 30°.

3. Dispositif suivant la revendication 1, **caractérisé en ce que** la bague élastique (7) est appuyée sur le support (5), et **en ce que** la face qui se rétrécit (10) est formée sur le côté de la bague élastique (7) tourné vers l'axe de l'arbre (2) et la face (9) correspondant à celle-ci (10) est formée sur le périmètre de l'arbre (2).

4. Dispositif suivant la revendication 1, **caractérisé en ce que** la bague élastique (7) est disposée dans une rainure périphérique formée sur l'arbre (2) et **en ce que** la face qui se rétrécit (13) est formée sur le côté de la bague élastique (7) situé à l'opposé de l'axe de l'arbre (2) et la face (14) correspondant à celle-ci est formée sur le support (5).

5. Dispositif suivant la revendication 1, **caractérisé en ce que** la bague élastique (7) est appuyée sur un retrait formé sur l'arbre (2) sur un épaulement périphérique tourné vers le support (5), et **en ce que** la face qui s'évase (16) est formée sur le côté de la bague élastique (7) tourné vers l'axe de l'arbre (2) et la face (17) correspondant à celle-ci est formée sur le support.

6. Dispositif suivant la revendication 1, **caractérisé en ce que** la bague élastique (7) est appuyée sur le support (5), et **en ce que** la face qui s'évase (18) est formée sur le côté de la bague élastique (7) situé à l'opposé de l'axe de l'arbre (2) et la face (19) correspondant à celle-ci est formée sur une contre-dépouille formée sur l'arbre (2).

7. Utilisation d'un dispositif suivant l'une quelconque des revendications 1 à 4 dans un dispositif d'essuie-glace d'un véhicule à moteur.
